(19)

Europäisches
Patentamt
European
Patent Office
Office européen
des brevets

(11) **EP 2 937 836 A2**

(12) **EUROPEAN PATENT APPLICATION**

(43) Date of publication:
**28.10.2015 Bulletin 2015/44**

(51) Int Cl.:
*G06T 7/00* (2006.01)          *G06T 7/20* (2006.01)

(21) Application number: **15164633.8**

(22) Date of filing: **22.04.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **23.04.2014 JP 2014089303**

(71) Applicant: **Kabushiki Kaisha Toshiba
Minato-ku
Tokyo (JP)**

(72) Inventors:
• **Seki, Akihito**
  **Tokyo (JP)**
• **Okada, Ryuzo**
  **Tokyo (JP)**
• **Ito, Satoshi**
  **Tokyo (JP)**

(74) Representative: **Noble, Nicholas
Kilburn & Strode LLP
20 Red Lion Street
London WC1R 4PJ (GB)**

(54) **FOREGROUND REGION EXTRACTION DEVICE AND FOREGROUND REGION EXTRACTION METHOD**

(57)    According to one embodiment, a foreground region extraction device (100) includes a processor (30) and a detector (50). The processor (30) acquires information of first distances at a first time between a first position (Pα) and a first region (R1). The processor (30) acquires information of second distances at a second time between a second positon (Pβ) and a second region (R2). The processor (30) derives a first image of the first region (R1) projected onto a first plane based on the first distances, and calculates a first feature based on the first image. The processor (30) derives a second image of the second region (R2) projected on to a second plane based on the second distances and a relative arrangement of the first position (R1) and the second position (R2) and calculates a second feature based on the second image. The detector (50) detects a moving body based on the first feature and the second feature.

**EP 2 937 836 A2**

**Description**

FIELD

Embodiments described herein relate generally to a foreground region extraction device and a foreground region extraction method.

BACKGROUND

For example, there is a foreground region extraction device that detects moving bodies and structures in the surroundings by using information obtained by a length measuring device and an imaging device. The foreground region extraction device extracts a foreground region by discriminating between a region (a background region) where the moving bodies, etc., exist in the surroundings and a region (the foreground region) other than the background region. It is desirable for such a foreground region extraction device to extract the foreground region using information obtained from mutually-different multiple positions.

BRIEF DESCRIPTION OF THE DRAWINGS

FIG. 1 is a block diagram illustrating a foreground region extraction device according to a first embodiment;
FIG. 2 is a flowchart illustrating the operation of the foreground region extraction device according to the first embodiment;
FIG. 3 is a schematic perspective view illustrating the state of use of the foreground region extraction device according to the first embodiment;
FIG. 4 is a schematic perspective view illustrating the operation of the movement estimation unit;
FIG. 5A and FIG. 5B are schematic views illustrating the operation of the image projector;
FIG. 6 is a schematic view illustrating the operation of the image projector;
FIG. 7 is a schematic view illustrating the foreground region extraction device according to the first embodiment;
FIG. 8 is a block diagram illustrating a foreground region extraction device according to a second embodiment;
FIG. 9 is a flowchart illustrating the operation of the foreground region extraction device according to the second embodiment;
FIG. 10 is a schematic perspective view illustrating the foreground region extraction device according to the second embodiment;
FIG. 11 is a schematic perspective view illustrating the foreground region extraction device according to the second embodiment;
FIG. 12 is a schematic view illustrating the operation of the foreground region extraction device according to the second embodiment;
FIG. 13 is a schematic view illustrating the operation of the foreground region extraction device according to the second embodiment; and
FIG. 14 is a schematic view illustrating the operation of the image projection determination unit

DETAILED DESCRIPTION

According to one embodiment, a foreground region extraction device includes a processor and a detector. The processor is capable of implementing a first operation. The first operation includes acquiring first distance information and second distance information. The first distance information includes information relating to a plurality of first distances at a first time. The second distance information includes information relating to a plurality of second distances at a second time that is different from the first time. Each of the first distances is a distance between a first position inside a three-dimensional space and a position of a plurality of points included in a first region inside the three-dimensional space. Each of the second distances is a distance between a second position inside the three-dimensional space and a position of a plurality of points included in a second region inside the three-dimensional space. The first region and the second region include a third position inside the three-dimensional space. The third position is different from the first position and the second position. The first operation includes deriving a first image of the points included in the first region projected onto a first plane based on the first distance information. The first operation includes calculating a first feature based on the first image. The first feature corresponds to a first projection position of the third position projected onto the first plane. The first operation includes deriving a second image of the points included in the second region projected onto a second plane based on the second distance information and a relative arrangement of the first position and the second position. The first operation includes calculating a second feature based on the second image. The second feature corresponds to a second projection position of the third position projected onto the second plane. The detector sets the third position to be included in a background region including a moving body moving inside the three-dimensional space when a difference between the first feature and the second feature is larger than a prescribed value. The detector sets the third position to be included in a foreground region not including the moving body when the difference is not more than the prescribed value.

According to one embodiment, a foreground region extraction device includes an imaging device, a processor and a detector. The imaging device images a three-dimensional space. The processor acquires a first image of a first region inside the three-dimensional space, a second image of a second region inside the three-dimensional space, and first distance information. The first region is imaged from a first position at a first time by the imaging device. The second region is imaged from a second position at a second time by the imaging device. The second time is different from the first time. The first distance information includes information relating to a plurality of first distances at the first time measured by a length measuring device. Each of the first distances is a distance between the length measuring device and a position of a plurality of points included in a third region inside the three-dimensional space. The first region, the second region, and the third region include a third position inside the three-dimensional space. The third position is different from the first position and the second position. The processor calculates a first feature based on the first image. The first feature corresponds to a first projection position of the third position projected onto the first image. The processor calculates a second feature based on the second image. The second feature corresponds to a second projection position of the third position projected onto the second image. The first projection position is determined based on the first distance information and a relative arrangement of the length measuring device and the imaging device. The second projection position is determined based on the first distance information, the relative arrangement of the length measuring device and the imaging device, and a relative arrangement of the first position and the second position. The detector sets the third position to be included in a background region including a moving body moving inside the three-dimensional space when a difference between the first feature and the second feature is larger than a prescribed value. The detector sets the third position to be included in a foreground region not including the moving body when the difference is not more than the prescribed value.

According to one embodiment, a foreground region extraction method is disclosed. The method includes acquiring first distance information and second distance information. The first distance information includes information relating to a plurality of first distances at a first time. The second distance information includes information relating to a plurality of second distances at a second time that is different from the first time. Each of the first distances is a distance between a first position inside a three-dimensional space and a position of a plurality of points included in a first region inside the three-dimensional space. Each of the second distances is a distance between a second position inside the three-dimensional space and a position of a plurality of positions included in a second region inside the three-dimensional space. The first region and the second region include a third position inside the three-dimensional space. The third position is different from the first position and the second position. The method includes deriving a first image of the points included in the first region projected onto a first plane based on the first distance information. The method includes calculating a first feature based on the first image. The first feature corresponds to a first projection position of the third position projected onto the first plane. The method includes deriving a second image of the points included in the second region projected onto a second plane based on the second distance information and a relative arrangement of the first position and the second position. The method includes calculating a second feature based on the second image. The second feature corresponds to a second projection position of the third position projected onto the second plane. The method includes setting the third position to be included in a background region including a moving body moving inside the three-dimensional space when a difference between the first feature and the second feature is larger than a prescribed value. The method includes setting the third position to be included in a foreground region not including the moving body when the difference is not more than the prescribed value.

According to one embodiment, a foreground region extraction method is disclosed. The method includes acquiring a first image of a first region inside a three-dimensional space. The first region is imaged from a first position at a first time by the imaging device. The method includes acquiring a second image of a second region inside the three-dimensional space. The second region is imaged from a second position at a second time by the imaging device. The second time is different from the first time. The method includes acquiring first distance information including information relating to a plurality of first distances at the first time measured by a length measuring device. Each of the first distances is a distance at a first time between the length measuring device and a position of a plurality of points included in a third region inside the three-dimensional space. The first region, the second region, and the third region include a third position inside the three-dimensional space. The third position is different from the first position and the second position. The method includes calculating a first feature based on the first image. The first feature corresponds to a first projection position of the third position projected onto the first image. The method includes calculating a second feature based on the second image. The second feature corresponds to a second projection position of the third position projected onto the second image. The first projection position is determined based on the first distance information and a relative arrangement of the length measuring device and the imaging device. The second projection position is determined based on the first distance information, the relative arrangement of the length measuring device and the imaging device, and a relative arrangement of the first position and the second position. The method includes setting the third position to be included in a background region including a moving body moving inside the three-dimensional space when a difference between the first feature and the second feature is larger than a prescribed value. The method includes setting the third position to be included in a foreground region not including the moving body when the difference is not more than the prescribed value.

According to one embodiment, a program is disclosed. The program causes a computer to acquire first distance information and second distance information. The first distance information includes information relating to a plurality of first distances at a first time. The second distance information includes information relating to a plurality of second distances at a second time that is different from the first time. Each of the first distances is a distance between a first position inside a three-dimensional space and a position of a plurality of points included in a first region inside the three-dimensional space. Each of the second distances is a distance between a second position inside the three-dimensional space and a position of a plurality of points included in a second region inside the three-dimensional space. The first region and the second region include a third position inside the three-dimensional space. The third position is different from the first position and the second position. The program causes the computer to derive a first image of the points included in the first region projected onto a first plane based on the first distance information. The program causes the computer to calculate a first feature based on the first image. The first feature corresponds to a first projection position of the third position projected onto the first plane. The program causes the computer to derive a second image of the points included in the second region projected onto a second plane based on the second distance information and a relative arrangement of the first position and the second position. The program causes the computer to calculate a second feature based on the second image. The second feature corresponds to a second projection position of the third position projected onto the second plane. The program causes the computer to set the third position to be included in a background region including a moving body moving inside the three-dimensional space when a difference between the first feature and the second feature is larger than a prescribed value, and set the third position to be included in a foreground region not including the moving body when the difference is not more than the prescribed value.

According to one embodiment, a program is disclosed. The program causes a computer to acquire a first image of a first region inside a three-dimensional space, a second image of a second region inside the three-dimensional space, and first distance information. The first region is imaged from a first position at a first time by an imaging device. The second region is imaged from a second position at a second time by the imaging device. The second time is different from the first time. The first distance information includes information relating to a plurality of first distances at the first time measured by a length measuring device. Each of the first distances is a distance between the length measuring device and a position of a plurality of points included in a third region inside the three-dimensional space. The first region, the second region, and the third region include a third position inside the three-dimensional space. The third position is different from the first position and the second position. The program causes the computer to calculate a first feature based on the first image and a second feature based one the second image. The first feature corresponds to a first projection position of the third position projected onto the first image. The second feature corresponds to a second projection position of the third position projected onto the second image. The first projection position is determined based on the first distance information and a relative arrangement of the length measuring device and the imaging device. The second projection position is determined based on the first distance information, the relative arrangement of the length measuring device and the imaging device, and a relative arrangement of the first position and the second position. The program causes the computer to set the third position to be included in a background region including a moving body moving inside the three-dimensional space when a difference between the first feature and the second feature is larger than a prescribed value, and set the third position to be included in a background region not including the moving body when the difference is not more than the prescribed value.

Various embodiments will now be described hereinafter with reference to the accompanying drawings.

The drawings are schematic or conceptual; and the relationships between the thicknesses and widths of portions, the proportions of sizes between portions, etc., are not necessarily the same as the actual values thereof. Further, the dimensions and/or the proportions may be illustrated differently between the drawings, even in the case where the same portion is illustrated.

In the drawings and the specification of the application, components similar to those described in regard to a drawing thereinabove are marked with like reference numerals, and a detailed description is omitted as appropriate.

First embodiment

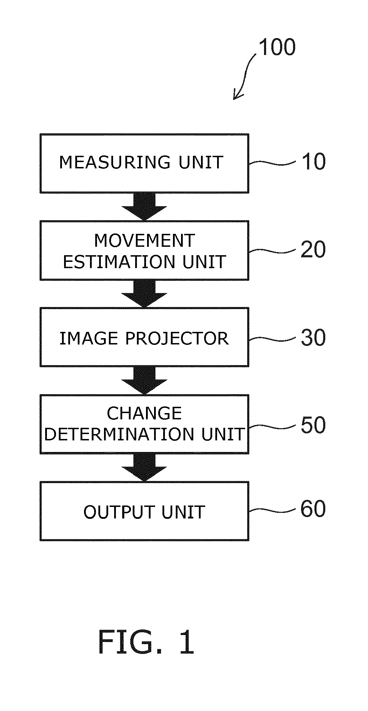

FIG. 1 is a block diagram illustrating a foreground region extraction device according to a first embodiment.

As shown in FIG. 1, the foreground region extraction device 100 according to the embodiment includes an image projector 30 (a processor) and a change determination unit 50 (a detector). In the example, the foreground region extraction device 100 further includes a measuring unit 10 (a length measuring device), a movement estimation unit 20, and an output unit 60.

For example, the length measuring device is installed in a moving vehicle body such as an elevator, a vehicle, etc., and acquires distance information of the surrounding space at different times. The movement estimation unit 20 estimates the movement of the length measuring device. The image projector 30 derives multiple images relating to the distance information based on the estimated movement of the length measuring device and the multiple distance information measured by the length measuring device. The change determination unit 50 detects whether an object existing inside a three-dimensional space is or is not moving based on the difference between the multiple images relating to the distance information. The output unit 60 outputs the position of the moving body inside the three-dimensional space, etc. Thus, the embodiment relates to a foreground region extraction device and a foreground region extraction method that extract a region (a foreground region) not including a moving body inside the three-dimensional space by using a length measuring device, etc., installed in a moving vehicle body such as a vehicle, an elevator, etc.

Here, the region (called a stationary region or a foreground region) that does not include a moving body moving inside the three-dimensional space is, for example, a region where the difference between the multiple images is small (e.g., nil). For example, a region where the difference between the images is large (a difference between the pixel values occurs) is set to be a moving body region (or a background region) where another object appears. The background region is the region including the moving body moving inside the three-dimensional space.

The block diagram of FIG. 1 is an example of the relevant components of the foreground region extraction device 100 according to the embodiment and does not necessarily match the configuration of an actual program module.

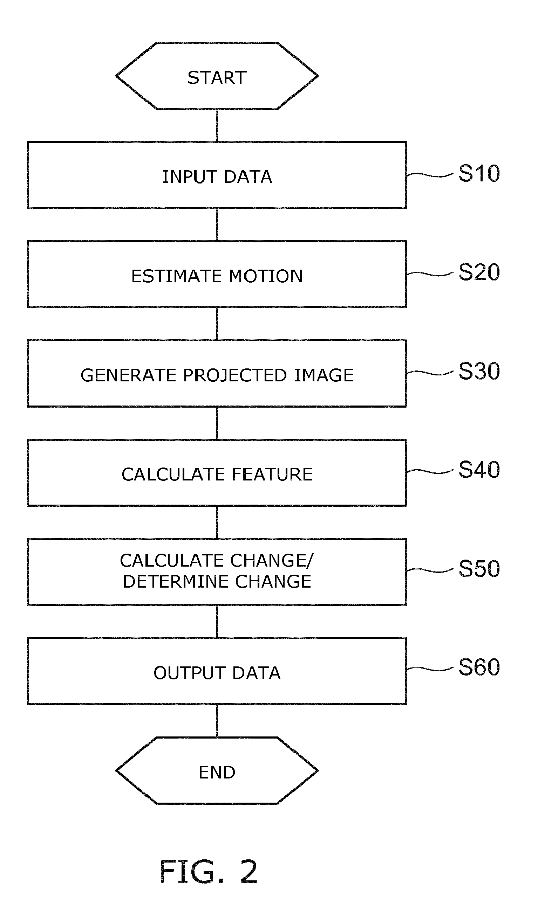

FIG. 2 is a flowchart illustrating the operation of the foreground region extraction device according to the first embodiment.

As shown in FIG. 2, the foreground region extraction device 100 implements step S10 to step S60.

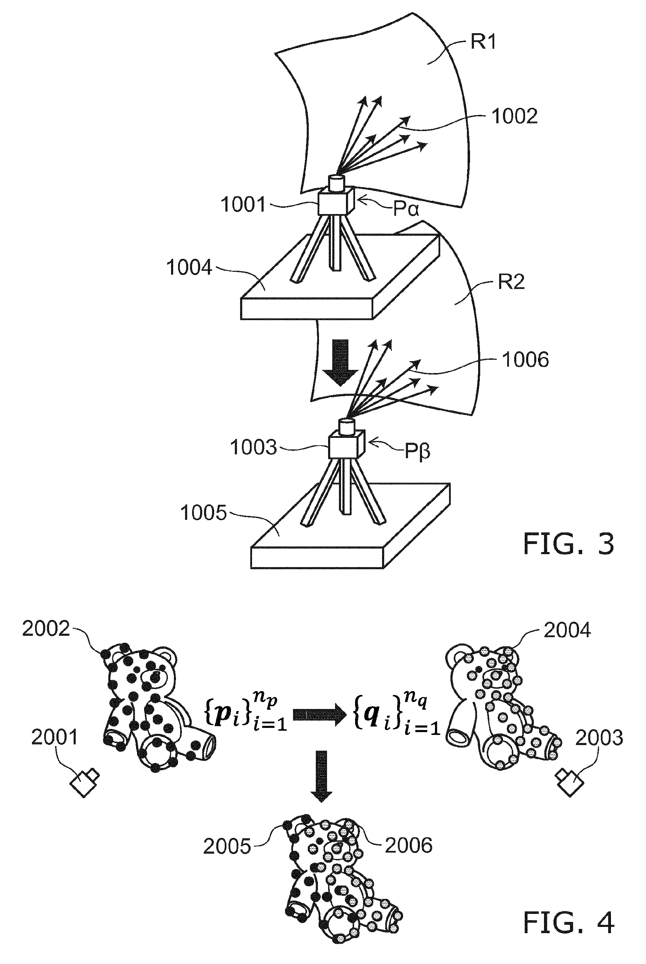

FIG. 3 is a schematic perspective view illustrating the state of use of the foreground region extraction device according to the first embodiment.

The length measuring device is installed in a moving vehicle body such as a robot, a vehicle, etc., provided inside the three-dimensional space. A length measuring device 1001 and a length measuring device 1003 are used in the example. The length measuring device 1001 is installed in a moving vehicle body 1004. The length measuring device 1003 is installed in a moving vehicle body 1005.

As shown in FIG. 3, the length measuring device 1001 is positioned at a first position $P\alpha$ at a first time T1. The length measuring device 1003 is positioned at a second position $P\beta$ at a second time T2 that is different from the first time T1.

The length measuring device 1001 generates first distance information by measuring the distances to the positions included in a first region R1 inside the three-dimensional space from the first position $P\alpha$ inside the three-dimensional space at the first time T1. The first region R1 includes multiple positions (multiple three-dimensional positions 1002) inside the three-dimensional space.

The first distance information includes information relating to multiple first distances. Each of the multiple first distances is a distance at the first time T1 between the first position $P\alpha$ and a three-dimensional position of the multiple three-dimensional positions (points) 1002.

The length measuring device 1003 generates second distance information by measuring the distances to the positions included in a second region R2 inside the three-dimensional space from the second position $P\beta$ inside the three-dimensional space at the second time T2. The second region R2 includes multiple positions (multiple three-dimensional positions 1006) inside the three-dimensional space.

The second distance information includes information relating to multiple second distances. Each of the multiple second distances is a distance at the second time T2 between the second position $P\beta$ and a three-dimensional position of the multiple three-dimensional positions (points) 1006.

For example, at least a portion of the second region R2 overlaps the first region R1. For example, the first region R1 and the second region R2 include a third position inside the three-dimensional space. The third position is different from the first position $P\alpha$ and the second position $P\beta$.

For such conditions, the foreground region extraction device 100 extracts the region (the foreground region) not including a moving body existing inside the three-dimensional space.

The length measuring device 1001 and the length measuring device 1003 may be the same length measuring device at different times. In other words, for the conditions shown in FIG. 3, the length measuring device 1001 that is positioned at the first position $P\alpha$ at the first time T1 may be considered to move on the moving vehicle body 1004 to the second position $P\beta$ at the second time T2. In such a case, the first position $P\alpha$ is the position of the length measuring device 1001 (the length measuring device 1003) at the first time T1; and the second position $P\beta$ is the position of the length measuring device 1001 (the length measuring device 1003) at the second time T2. In the embodiment, the length measurement may be performed at different times using two or more devices.

The length measuring device can acquire multiple three-dimensional positions. For example, the length measuring device acquires the three-dimensional positions by a TOF (Time Of Flight) method using laser light. For example, the length measuring device emits a first light, observes a second light which is the reflected first light, and measures the distance information based on at least one of the difference between the phase of the first light and the phase of the second light or the difference between the time when the first light is emitted and the time when the second light is observed.

For example, there is a 3D laser scanner that emits laser light in multiple directions using a rotating mirror, etc. The multiple three-dimensional positions may be determined thereby. There is also a method for acquiring the multiple three-dimensional positions by projecting a special pattern from a projector and analyzing the appearance of the pattern.

In step S10, the distance data that is measured at different multiple positions is input. For example, the first distance information and the second distance information are input to the foreground region extraction device 100.

In step S20, the movement estimation unit 20 determines the relative arrangement of the first position $P\alpha$ and the second position $P\beta$. For example, the movement (the motion) of the length measuring device inside the three-dimensional space is determined. The motion is expressed by a three-dimensional rotation matrix and a three-dimensional translation vector. The motion can be estimated by (a) a method using length measurement data acquired at two or more different positions, or (b) a method using another sensor.

In the case where method (a) is used, the relative arrangement (the motion) of the length measuring devices is estimated using multiple three-dimensional positions measured at mutually-different positions.

The motion is expressed using a rotation matrix R and a translation vector t. The three-dimensional position that is measured by the length measuring device 1001 is, for example, a coordinate X in a coordinate system having the first position $P\alpha$ as the reference. The coordinate X is converted into a coordinate X' of a coordinate system having the second position $P\beta$ as the reference by Formula (1).

[Formula 1]

$$\mathbf{X}' = \mathbf{RX} + \mathbf{t} \quad \cdots (1)$$

FIG. 4 is a schematic perspective view illustrating the operation of the movement estimation unit.

For example, a length measuring device 2001 generates distance information by measuring multiple three-dimensional positions 2002. The distance information is obtained as three-dimensional position sets $p_i$. A length measuring device 2003 generates distance information by measuring multiple three-dimensional positions 2004. The distance information is obtained as multiple three-dimensional position sets $q_i$.

The three-dimensional positions 2002 and the three-dimensional positions 2004 are converted using Formula (1). For example, as shown in Formula (2), the rotation matrix R and the translation vector t are determined so that the error after the coordinate conversion is small.

[Formula 2]

$$(\mathbf{R}, \mathbf{t}) \leftarrow \arg\min_{\mathbf{R}, \mathbf{t}} \sum \left| \mathbf{q}_i - (\mathbf{R}\mathbf{p}_i + \mathbf{t}) \right|^2 \quad \cdots (2)$$

Methods for reducing the error include, for example, an ICP (Iterative Closest Point) method, etc. It is possible to perform coordinate conversion of the three-dimensional coordinates by estimating the relative arrangement of the three-dimensional positions 2002 measured by the length measuring device 2001 and the three-dimensional positions 2004 measured by the length measuring device 2003. In the example, the three-dimensional positions 2002 are converted into three-dimensional positions 2005; and the three-dimensional positions 2004 are converted into three-dimensional positions 2006.

Here, the length measuring device 1001 is replaced in the description with the length measuring device 2001; and the length measuring device 1003 is replaced in the description with the length measuring device 2003. The motion between the length measuring device 1001 and the length measuring device 1003 is expressed by the rotation matrix R and the translation vector t that are determined.

The length measurement data is not used in the case where the other sensor of method (b) is used. For example, in the case where the moving vehicle body 1004 is an automobile or a robot, the movement of the moving vehicle body 1004 is determined using a steering angle and/or an encoder that determines a rotation of the vehicle. In the case where the moving vehicle body 1004 moves in a straight line like an elevator, the motion of the moving vehicle body 1004 may be estimated using the combination of an encoder and an acceleration sensor.

In step S30, the image projector 30 derives a first image of multiple points included in a first region projected onto a first plane based on the first distance information, and derives a second image of multiple points included in a second region projected onto a second plane based on the second distance information.

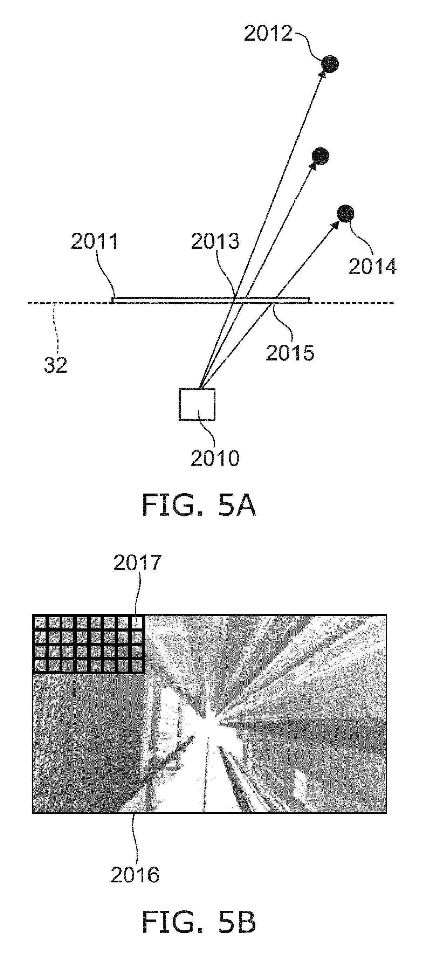

FIG. 5A and FIG. 5B are schematic views illustrating the operation of the image projector.

The projection method will now be described using FIG. 5A and FIG. 5B. As shown in FIG. 5A, a length measuring device 2010 generates distance information including multiple three-dimensional positions. In the example, the distance information includes a three-dimensional position 2012, a three-dimensional position 2014, etc. A two-dimensional image 2011 is generated by the three-dimensional positions being projected onto a plane 32.

The three-dimensional position 2012 is projected onto a projection position 2013 (a projection position) of the two-dimensional image 2011. The three-dimensional position 2014 is projected onto a projection position 2015 of the two-dimensional image 2011. This relationship is determined uniquely by Formula (3).

[Formula 3]

$$
\begin{bmatrix} x \\ y \\ 1 \end{bmatrix} \sim \begin{bmatrix} fx & 0 & cx \\ 0 & fy & cy \\ 0 & 0 & 1 \end{bmatrix} \begin{bmatrix} rv_{11} & rv_{12} & rv_{13} & tv_x \\ rv_{21} & rv_{22} & rv_{23} & tv_y \\ rv_{31} & rv_{32} & rv_{33} & tv_z \end{bmatrix} \begin{bmatrix} X \\ Y \\ Z \\ 1 \end{bmatrix} \quad \cdots (3)
$$

Here, ($x, y$, 1) is a projection position on a two-dimensional image in a homogeneous coordinate system; and ($X, Y, Z$, 1) is a three-dimensional position in the homogeneous coordinate system.

For example, an image of the two-dimensional image 2011 imaged by a camera is imagined. In such a case, ($fx, fy, cx, cy$) may be considered to be internal parameters of a virtual camera that images the two-dimensional image 2011. For example, fx is the focal length of the virtual camera for the x-coordinate of the image divided by the size of one pixel; and $fy$ is the focal length of the virtual camera for the y-coordinate of the image divided by the size of one pixel. $cx$ is the x-coordinate of the optical center of the virtual camera; and $cy$ is the y-coordinate of the optical center of the virtual camera. $rv11$ to $rv33$ are the rotation matrix of the virtual camera; and $tvx$ to $tvz$ are the translation vector of the virtual camera.

The internal parameters, a rotation matrix Rv, and a translation vector tv are set arbitrarily. In other words, the positions of the plane where the three-dimensional positions are projected, the size of the two-dimensional image, etc., can be set to any size. The motion information of the length measuring device may be used for the internal parameters, the rotation matrix Rv, and the translation vector tv. Specifically, the following description is desirable.

The case is considered where a two-dimensional image 2011α is derived by projecting the three-dimensional positions 1002 onto the plane. First, projection positions α of the three-dimensional positions 1002 projected onto the two-dimensional image 2011α are determined. For example, the motion from the first position Pα to the second position Pβ is expressed using the rotation matrix R and the translation vector t. Here, the coordinate system that has the first position Pα as the reference is considered to be the global coordinate system. Because the coordinate system that has the first position Pα as the reference matches the global coordinate system, it is sufficient to set the rotation matrix Rv to be the identity matrix and the translation vector t to be 0 when converting the three-dimensional positions measured by the length measuring device 1001. For example, the three-dimensional positions 1002 that are measured by the length measuring device 1001 are substituted for ($X, Y, Z$) in Formula (3). Thereby, the projection positions α are determined on the two-dimensional image 2011α where the three-dimensional positions 1002 (the first distance information) are projected.

As shown in FIG. 5B, the two-dimensional image 2011 is, for example, an image 2016 including small grid squares 2017 (pixels). Similarly, the two-dimensional image 2011α is an image 2016α (a first image) including small grid squares.

For example, the three-dimensional positions proximal to the virtual camera are observed; and the three-dimensional positions distal to the virtual camera are not observed easily. Therefore, for example, at the projection position α, the value of the Z-coordinate of the three-dimensional position 1002 measured by the length measuring device 1001 is compared to a pre-stored value; and the smaller value is stored in the small grid square. Similar processing is performed for the other three-dimensional positions measured by the length measuring device 1001. Thereby, the image 2016α is derived.

As described above, the first image is derived in which the multiple points included in the first region R1 are projected onto the first plane based on the first distance information.

The case will now be considered where a two-dimensional image 2011β is derived by projecting the multiple three-dimensional positions 1006 measured by the length measuring device 1003 onto a plane. First, the rotation matrix and the translation vector that are used when projecting the three-dimensional positions 1006 are considered.

Here, as described above, the coordinate system having the first position Pα as the reference is the global coordinate system. Therefore, for example, the virtual camera that images the two-dimensional image 2011β of the three-dimensional positions 1006 is caused to match the virtual camera that images the two-dimensional image 2011α of the three-dimensional positions 1002. That is, the coordinate system that is used for the two-dimensional image of the virtual camera is set to be the coordinate system having the first position Pα as the reference.

The three-dimensional positions 1006 of the coordinate system having the second position Pβ as the reference are expressed in the global coordinate system. Because Formula (1) converts from the global coordinate system to the coordinate system having the second position Pβ as the reference, the conversion from the coordinate system having the second position Pβ as the reference to the global coordinate system is the inverse transform of Formula (1). This is shown as Formula (4).

[Formula 4]

$$\mathbf{X} = \mathbf{R}^t \mathbf{X}' - \mathbf{R}^t \mathbf{t} \quad \cdots (4)$$

For example, the three-dimensional position that is measured by the length measuring device 1003 is expressed by the coordinate X' in the coordinate system having the second position Pβ as the reference. The coordinate X' is converted into the coordinate X of the global coordinate system by Formula (4). As described above, the rotation matrix R and the translation vector t are determined by the relative arrangement of the first position Pα and the second position Pβ.

The coordinates of the three-dimensional positions 1006 measured at the second position Pβ are converted by Formula (4); and the converted coordinates are substituted into Formula (3). Thereby, projection positions β are determined on the two-dimensional image 2011β where the three-dimensional positions 1006 (the second distance information) are projected. In the example, the second plane matches the first plane.

A two-dimensional image 2016β (a second image) is derived by a method similar to the derivation of the two-dimensional image 2016α.

Thus, the projection positions of the three-dimensional positions 1006 projected onto the second plane are determined from the relative arrangement of the first position Pα and the second position Pβ. Small grid squares are set on the second plane. The distance information inside the three-dimensional space is stored in the small grid squares. Thus, the second image is derived in which the multiple points included in the second region R2 are projected onto the second plane based on the second distance information and the relative arrangement of the first position Pα and the second position Pβ.

A value of the depth (the distance to the object) most proximal to the virtual camera is included in each of the small grid squares of the two-dimensional image 2016α and each of the small grid squares of the two-dimensional image 2016β; and the depths are converted to have the global coordinates as the reference.

In the embodiment, it may be considered to use a global coordinate system having as its reference a position different from the position of the imaging device.

In step S40, the image projector 30 implements a first operation of calculating features based on the two-dimensional image 2016. For example, a first feature is calculated based on the two-dimensional image 2016α; and a second feature is calculated based on the two-dimensional image 2016β. For example, the values that are stored in the small grid squares may be used as the features.

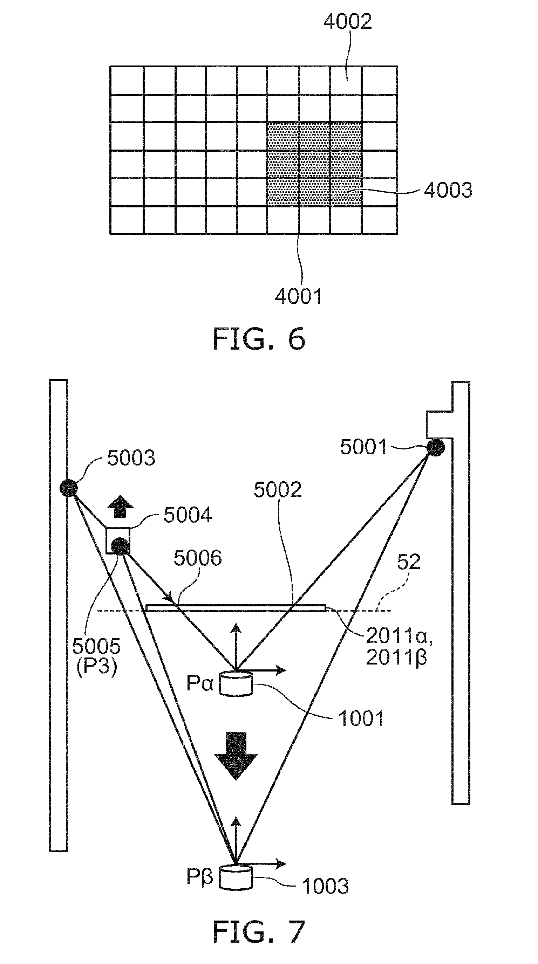

FIG. 6 is a schematic view illustrating the operation of the image projector.

FIG. 6 shows an image 4001 which is an enlarged portion of the image 2016. A small region 4003 is a region including multiple small grid squares 4002.

The features may be the values (the pixel values) of the small grid squares inside the small region 4003 arranged in order of the arrangement of the small grid squares. For example, the first feature is the pixel value at the first projection position of the first image; and the second feature is the pixel value at the second projection position of the second image.

The feature may be the gradient calculated by calculating the gradient of the values of adjacent small grid squares. In such a case, for example, the first feature is the gradient of the pixel value at the first projection position of the first image; and the second feature is the gradient of the pixel value at the second projection position of the second image.

The feature may be the maximum value, minimum value, average value, or variance inside the small region 4003. In such a case, the first feature is calculated from the multiple pixel values inside the region on the first image including the first projection position. The second feature is calculated from the multiple pixel values inside the region on the second image including the second projection position.

Further, a SIFT (Scale Invariant Fast Feature), a SURF (Speeded Up Robust Feature), or the like that is used often in image processing may be used.

In step S50, the foreground region is extracted using the feature calculated in step S40.

FIG. 7 is a schematic view illustrating the foreground region extraction device according to the first embodiment.
For example, a difference occurs between the feature of the two-dimensional image 2016α and the feature of the two-dimensional image 2016β. The reason that such a change of the feature occurs is described with reference to FIG. 7.
For example, the third position inside the three-dimensional space is measured by the length measuring device 1001 and the length measuring device 1003. The two-dimensional image 2011α is derived by the multiple three-dimensional positions 1002 measured by the length measuring device 1001 being projected onto, for example, a plane 52 (a first plane). The two-dimensional image 2011β is derived by the multiple three-dimensional positions 1006 measured by the length measuring device 1003 being projected onto, for example, the plane 52 (the second plane).
The position on the two-dimensional image 2011α (and on the two-dimensional image 2016α) where a three-dimensional position 5001 is projected is a position 5002. Similarly, the position on the two-dimensional image 2011β (and on the two-dimensional image 2016β) where the three-dimensional position 5001 is projected is the position 5002.
A three-dimensional position 5003 that is observed from the length measuring device 1001 will now be focused on. Here, a moving body 5004 is taken to exist at a three-dimensional position 5005 at the second time T2 when the measurement is performed by the length measuring device 1003. The three-dimensional position 5003 can be observed from the length measuring device 1001 positioned at the first position Pα at the first time T1.
The position on the two-dimensional image 2011α where the three-dimensional position 5003 is projected is a position 5006. Similarly, the position on the two-dimensional image 2011β where the three-dimensional position 5003 is projected is the position 5006.
The moving body 5004 at the second time T2 when the measurement is performed by the length measuring device 1003 exists on a line connecting the first position Pα and the three-dimensional position 5003. Therefore, the position on the two-dimensional image 2011β where the moving body 5004 (the three-dimensional position 5005) is projected also is the position 5006.
Here, in step S40 described above, the distance information of the three-dimensional position proximal to the length measuring device is stored in the small grid square of the two-dimensional image. The distance information of the three-dimensional position 5005 is stored in the small grid square of the position 5006 of the two-dimensional image 2011β. On the other hand, the distance information of the three-dimensional position 5003 is stored in the small grid square of the position 5006 of the two-dimensional image 2011α.
Thus, the depth value of the position 5006 of the two-dimensional image 2011α is different from the depth value of the position 5006 of the two-dimensional image 2016α. Thereby, it can be determined that there is a moving object at the three-dimensional position 5005.
As described above, the image projector 30 projects a third position P3 (e.g., the three-dimensional position 5005) inside the three-dimensional space onto the first projection position (e.g., the position 5006) of the plane 52. The first feature that corresponds to the first projection position is calculated based on the two-dimensional image 2016α. Similarly, the third position inside the three-dimensional space is projected onto the second projection position (e.g., the position 5006) of the plane 52. The second feature that corresponds to the second projection position is calculated based on the two-dimensional image 2016β.
The change determination unit 50 detects whether the object (e.g., the moving body 5004) positioned at the third position is or is not moving inside the three-dimensional space based on the first feature and the second feature.
For example, the change determination unit 50 determines that the third position is included in the background region when the difference between the first feature and the second feature is larger than a prescribed value. On the other hand, the change determination unit 50 determines that the third position is included in the foreground region when the difference between the first feature and the second feature is not more than the prescribed value.
Continuing, the method for calculating the change of the feature will now be described.
For example, the change of the feature is based on the difference between the first feature and the second feature. For example, the change of the feature is calculated by Formula (5).
[Formula 5]

$$ diff = \left| \mathbf{f}_{I\alpha}(k) - \mathbf{f}_{I\beta}(k) \right|^{x} \quad \cdots (5) $$

Here, $f_{I\alpha}(k)$ is a feature corresponding to a position k of the two-dimensional image 2011α. $f_{I\beta}(k)$ is a feature corresponding to the position k of the two-dimensional image 2011β. $f_{I\alpha}(k)$ and $f_{I\beta}(k)$ may be vectors. When x is 1, Formula (5) is the first-order norm of the features; and when x is 2, Formula (5) is the second-order norm of the features. A correlation used in image processing, etc., may be used to calculate the change of the feature. A prescribed threshold is provided for the difference between the features; and it is determined that a change occurred when the prescribed value is exceeded. It can be determined that a moving body exists when a change has occurred.

For example, in step S60, the output unit 60 outputs the position of the small grid square where the moving body is determined to have existed. For example, the output unit 60 outputs the position most proximal to the first position Pα of the three-dimensional positions relating to the small grid square where the moving body is determined to have existed as a three-dimensional position belonging to the moving body.

For example, there is a method of a reference example in which multiple images are acquired at different times, and the region where the moving body exists inside the three-dimensional space is extracted from difference information of the multiple images. In this method, the images are compared to each other; and the regions where the difference of the pixel values is larger than a prescribed value are set to be background regions. However, in the case where the imaging device that performs the imaging of the images is installed in a moving vehicle body such as a vehicle, a robot, etc., the position of the imaging device moves due to the movement of the moving vehicle body; and the position where the image is acquired changes. The entire image shifts due to the change of the position where the image is acquired. In such a case, it is difficult to extract the foreground region using the difference information of the pixel value.

Conversely, in the embodiment, the distance information is measured at different multiple times using a length measuring device installed in a moving vehicle body. Multiple distance information are projected onto two-dimensional images and features are obtained using the three-dimensional movement of the moving vehicle body. By comparing the features, the foreground region can be extracted even in the case where the position of the length measuring device moves. For example, when the three-dimensional position (the third position) is the foreground of the moving vehicle body, there is no difference between the features of the projection position corresponding to the three-dimensional position. Thereby, it is determined that the three-dimensional position is a stationary region not including another moving body.

Thus, in the embodiment, the region (the background region) where the moving body appears and the region (the foreground region) not including the moving body can be extracted by using the distance information obtained from mutually-different multiple positions. The foreground region can be extracted stably even when the position of the length measuring device changes.

Second embodiment

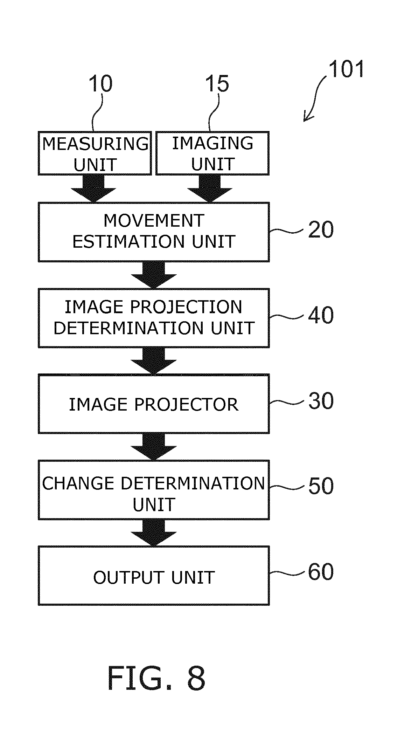

FIG. 8 is a block diagram illustrating a foreground region extraction device according to a second embodiment.

As shown in FIG. 8, similarly to the first embodiment, the foreground region extraction device 101 according to the embodiment includes the measuring unit 10 (the length measuring device), the movement estimation unit 20, the image projector 30, the change determination unit 50, and the output unit 60. The foreground region extraction device 101 further includes an imaging unit 15 (the imaging device) and an image projection determination unit 40. For example, the relative arrangement of the imaging device and the length measuring device is known. The imaging device images the three-dimensional space. The image projection determination unit 40 estimates the effective projection range described below based on the image that is imaged by the imaging device.

The block diagram shown in FIG. 8 is an example of the relevant components of the foreground region extraction device 101 according to the embodiment and does not necessarily match the configuration of the actual program module.

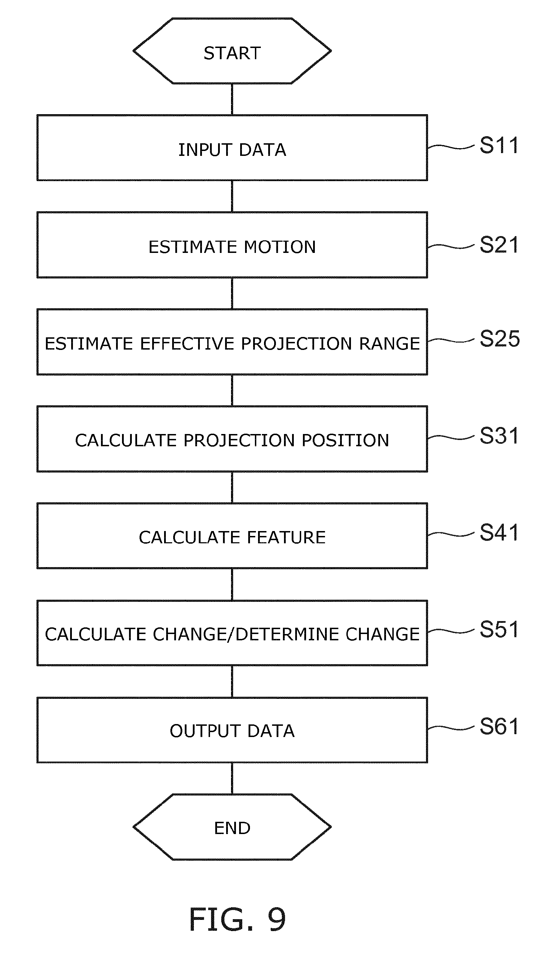

FIG. 9 is a flowchart illustrating the operation of the foreground region extraction device according to the second embodiment.

As shown in FIG. 9, the foreground region extraction device 101 implements step S11 to step S61. Steps S11, S21, S31, S41, S51, and S61 are similar to steps S10, S20, S30, S40, S50, and S60 of the first embodiment, respectively. In the second embodiment, step S25 is further implemented.

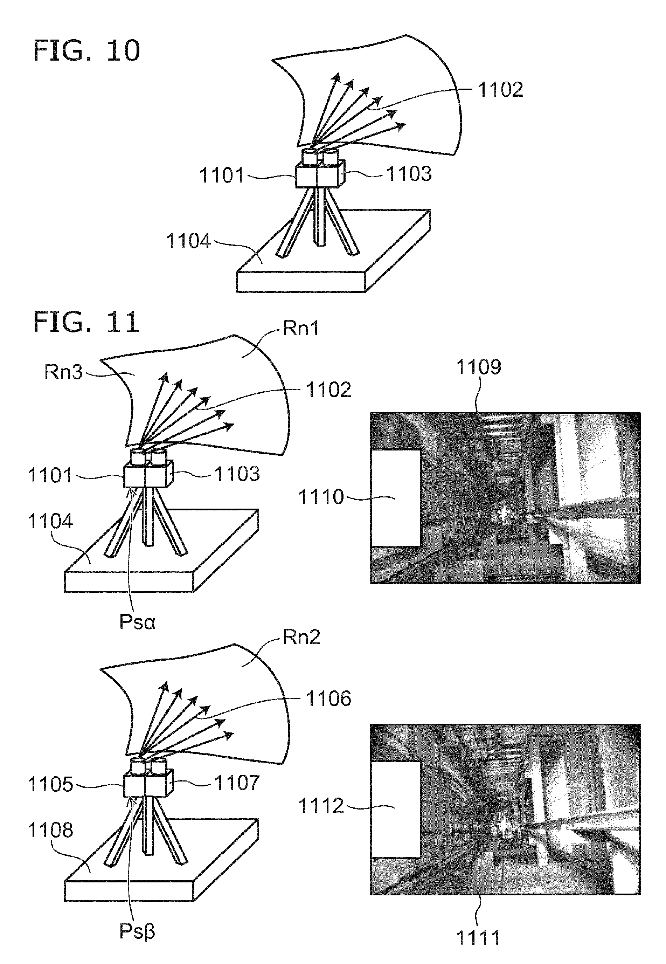

FIG. 10 is a schematic perspective view illustrating the foreground region extraction device according to the second embodiment.

An imaging device 1103 images the three-dimensional space at multiple different times. For example, the position of a length measuring device 1101 is different at the multiple times when the imaging is performed.

For example, the length measuring device 1101 generates the multiple distance information by measuring the distance inside the three-dimensional space at the multiple times when the imaging device 1103 performs the imaging.

For example, the length measuring device 1101 generates information relating to multiple three-dimensional positions 1102. For example, the imaging device 1103 images the region including the multiple three-dimensional positions 1102.

In the example, the imaging device 1103 and the length measuring device 1101 are installed in the same moving vehicle body 1104. The relative arrangement of the length measuring device 1101 and the imaging device 1103 is known. In other words, a rotation matrix Rc and the translation vector tc that express the relative arrangement of the length measuring device 1101 and the imaging device 1103 are known. Also, the internal parameters of the imaging device 1103 (corresponding to $fx, fy, cx,$ and $cy$ of Formula (3)) are known.

In step S11, the image that is imaged by the imaging device 1103 and the distance information that is generated by the length measuring device 1101 are input. For example, the rotation matrix Rc, the translation vector tc, the internal parameters of the imaging device 1103, etc., also are input.

FIG. 11 is a schematic perspective view illustrating the foreground region extraction device according to the second embodiment. In step S21, the motion of the length measuring device 1101 and the imaging device 1103 is determined. In the example, the length measuring device 1101 and the imaging device 1103 are installed in the moving vehicle body 1104. Therefore, the motion of the length measuring device 1101 and the imaging device 1103 may be replaced in the description with the motion of the moving vehicle body 1104. The method for estimating the motion may be used as the method described in step S20.

The motion may be estimated using the image in the second embodiment because the imaging device 1103 is included in the second embodiment. To estimate the motion using the images, points (feature points) having a feature are extracted from the images; and the feature points of the image prior to the movement are associated with the feature points of the image after the movement. If there are five or more corresponding sets of feature points, the fundamental matrix expressing the epipolar constraints can be determined using the positions of the corresponding sets of feature points on the images. The motion is estimated by decomposing the fundamental matrix using algebraic operations.

The moving vehicle body 1104 is moving in the example shown in FIG. 11. The imaging device 1103 is moving from a first position Psα to a second position Psβ. For example, the imaging device 1103 images a first image 1109 and a second image 1111. The first image 1109 is the image of a first region Rn1 inside the three-dimensional space imaged from the first position Psα at a first time Tm1. The second image 1111 is the image of a second region Rn2 inside the three-dimensional space imaged from the second position Psβ at a second time Tm2.

In the example, the imaging device 1103 and an imaging device 1107 are the same device at different times. Similarly, the length measuring device 1101 and a length measuring device 1105 are the same device at different times. The moving vehicle body 1104 and a moving vehicle body 1108 are the same moving vehicle body at different times.

The relative arrangement of the imaging device and the length measuring device is determined from the rotation matrix Rc and the translation vector tc of step S11. Therefore, the coordinate system that has the position of the imaging device as the reference and the coordinate system that has the position of the length measuring device as the reference are mutually convertible.

In step S25, the image projection determination unit 40 determines the effective projection range from the multiple images that are imaged by the imaging device. For example, there are cases where an attachment that has motion similar to that of the moving vehicle body 1104 is attached to the moving vehicle body and/or the imaging device. The effective projection range is the region on the two-dimensional image not including such an attachment. The effective projection range is the region including the moving body and the stationary region other than the region where the attachment appears. In FIG. 11, a region 1110 that appears in the first image 1109 and a region 1112 that appears in the second image 1111 correspond to an attachment of the moving vehicle body that has the same motion as the moving vehicle body. The region 1110 and the region 1112 exist at the same position in the images imaged from different positions at different times.

In other words, the first image 1109 includes a first portion (in the example, the region 1110) and the first image feature corresponding to the first portion. The second image 1111 includes a second portion (in the example, the region 1112) and the second image feature corresponding to the second portion. The position of the first portion of the first image 1109 corresponds to the position of the second portion of the second image 1111.

The image projection determination unit 40 determines the effective projection range based on the size of the difference between the first image feature and the second image feature. For example, the region that corresponds to the attachment having the same motion as the moving vehicle body 1104 is designated by referring to the difference (the change) between the first image 1109 and the second image 1111. For example, the difference between the first image 1109 and the second image 1111 is determined; and it is determined that there was no change in the case where the difference is smaller than a prescribed value.

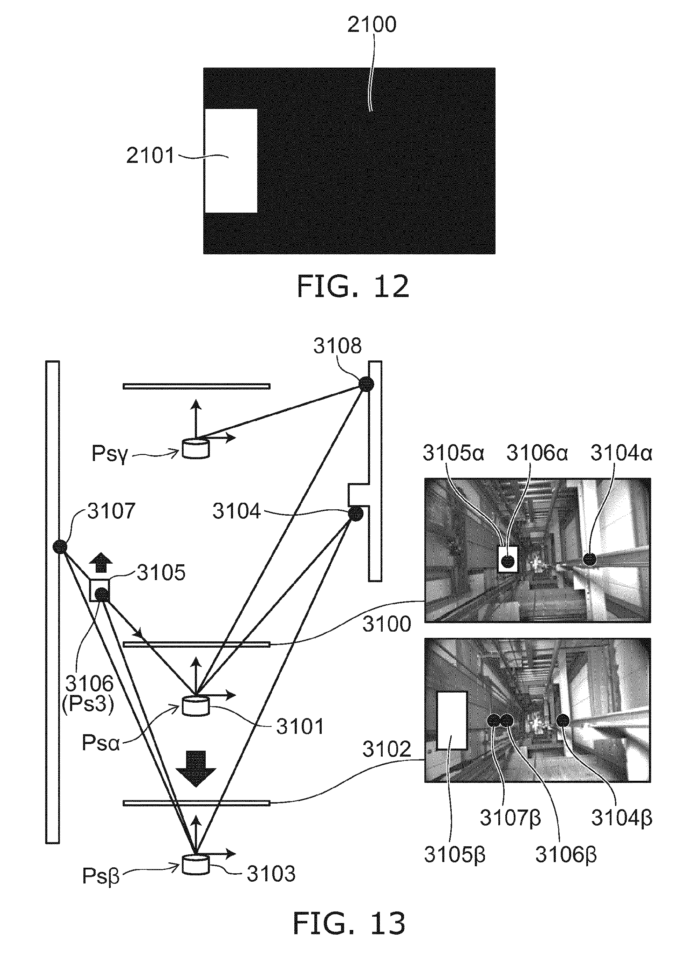

FIG. 12 is a schematic view illustrating the operation of the foreground region extraction device according to the second embodiment.

FIG. 12 is an image 2100 determined from the difference between the first image 1109 and the second image 1111. The black region of the image 2100 is within the effective projection range. A white region 2101 is the region where there was no difference. For example, the processing of the subsequent steps proceeds only within the effective projection range. The processing of this step may be omitted in the case where an attachment does not appear in the images of the imaging device.

FIG. 13 is a schematic view illustrating the operation of the foreground region extraction device according to the second embodiment.

In step S31, the multiple three-dimensional positions that are measured by the length measuring device based on the motion determined in step S11 are projected onto two-dimensional images.

In the example, the imaging device 1103 images a first image 3100 from the first position Psα at the first time Tm1. The first image 3100 is the image of the first region Rn1 inside the three-dimensional space that is imaged.

The imaging device 1103 images a second image 3102 from the second position Psβ at the second time Tm2.

The second image 3102 is the image of the second region Rn2 inside the three-dimensional space that is imaged.

A length measuring device 3101 of FIG. 13 corresponds to the length measuring device 1101 of FIG. 11; and a length measuring device 3103 of FIG. 13 corresponds to the length measuring device 1105 of FIG. 11. The length measuring device 3101 measures the first distance information at the first time Tm1. In the example, the first distance information includes information relating to the multiple first distances. Each of the multiple first distances is a distance between the length measuring device and a position of the multiple positions included in a third region Rn3 inside the three-dimensional space (referring to FIG. 11). The length measuring device 3103 may further measure the second distance information inside the three-dimensional space at the second time Tm2.

The second time Tm2 is different from the first time Tm1. For example, the first region Rn1, the second region Rn2, and the third region Rn3 include a third position Ps3 inside the three-dimensional space. The third position Ps3 is different from the first position Ps$\alpha$ and the second position Ps$\beta$.

The three-dimensional positions that are measured by the length measuring device are projected onto the image of the imaging device.

For example, a three-dimensional position 3104 that is measured by the length measuring device 3101 is projected onto a projection position 3104$\alpha$ on the first image 3100. The projection position 3104$\alpha$ is determined using Formula (3). The three-dimensional position 3104 is $(X, Y, Z)$. For example, the three-dimensional position 3104 $(X, Y, Z)$ is determined from the first distance information. The rotation matrix and translation vector of the virtual camera are caused to correspond to the camera (the real camera) of the actual imaging device. For example, the internal parameters of the camera, the rotation matrix Rc, and the translation vector tc input in step S11 are substituted into Formula (3) to determine the projection position 3104$\alpha$. Thereby, for example, the virtual camera is caused to match the real camera. As described above, the rotation matrix Rc and the translation vector tc are determined from the relative arrangement of the length measuring device and the imaging device.

The three-dimensional position 3104 is projected onto a projection position 3104$\beta$ on the second image 3102. The projection position 3104$\beta$ is determined using Formula (3).

The motion from the first position Ps$\alpha$ to the second position Ps$\beta$ is determined in step S21. The rotation matrix and the translation vector that correspond to the relative arrangement of the first position Ps$\alpha$ and the second position Ps$\beta$ are substituted into Formula (3). It is sufficient to use the internal parameters of the camera input in step S11. The same $(X, Y, Z)$ as that when determining the projection position 3104$\alpha$ is used as the three-dimensional position 3104.

The object that is projected onto the position 3104$\alpha$ is the same as the object that is projected onto the position 3104$\beta$. The three-dimensional position 3104 may not necessarily be measured by the length measuring device 3103. In other words, the second distance information may not be measured. In the example, the length measuring device measures only the first distance information.

Similarly, a three-dimensional position 3106 determines a projection position 3106$\alpha$ projected onto the first image 3100. The three-dimensional position 3106 determines a projection position 3106$\beta$ projected onto the second image 3102.

In the example shown in FIG. 13, a moving body 3105 exists at the three-dimensional position 3106 at the first time Tm1 when the imaging device performs the imaging at the first position Ps$\alpha$. The moving body 3105 does not exist at the three-dimensional position 3106 at the second time Tm2 when the imaging device performs the imaging at the second position Ps$\beta$.

If the moving body 3105 does not exist at the three-dimensional position 3106 at the first time Tm1, a three-dimensional position 3107 that is on a straight line connecting the three-dimensional position 3106 and the optical center of the first image 3100 is projected onto the projection position 3106$\alpha$ on the first image 3100.

The three-dimensional position 3107 is projected onto a projection position 3107$\beta$ on the second image 3102. Inside the three-dimensional space, the three-dimensional position 3106 is different from the three-dimensional position 3107. Therefore, the projection position 3106$\beta$ and the position 3107$\beta$ are mutually-different positions on the second image 3102.

In the example, the moving body 3105 exists at the three-dimensional position 3106 at the first time Tm1. Therefore, the object (the subject) at the projection position 3106$\alpha$ on the first image 3100 is different from the object at the projection position 3106$\beta$ on the second image 3102. The appearance at the projection position 3106$\alpha$ on the first image 3100 is different from the appearance at the projection position 3106$\beta$ on the second image 3102. The foreground region is extracted by determining the change in step S41 to step S51.

In such a second embodiment, the image projector 30 projects the third position (e.g., the three-dimensional position 3106) inside the three-dimensional space onto the first projection position (e.g., the projection position 3106$\alpha$) on the first image 3100. The first feature that corresponds to the first projection position is calculated based on the first image 3100. Further, the image projector 30 projects the third position onto the second projection position (e.g., the projection position 3106$\beta$) on the second image 3102. The second feature that corresponds to the second projection position is calculated based on the second image 3102. Then, the change determination unit 50 determines the change based on the first feature and the second feature and detects whether the object at the third position is or is not moving inside the three-dimensional space. For example, the third position is set to be included in the background region when the difference between the first feature and the second feature is larger than a prescribed value. The third position is set to be included in the foreground region when the difference between the first feature and the second feature is smaller than the prescribed value.

As described above, the first projection position is determined based on the first distance information and the relative arrangement of the length measuring device and the imaging device. The second projection position is determined based on the first distance information, the relative arrangement of the length measuring device and the imaging device, and the relative arrangement of the first position and the second position.

For example, when the projection position is not within the effective projection range determined in step S25, the projection position corresponds to a moving body having the same motion as the motion of the moving vehicle body. Such projection positions that are outside the effective projection range are pre-removed. Thereby, for example, the correct determination can be performed in step S41 to step S51. For example, the image projector 30 calculates the first feature when the first projection position is within the effective projection range.

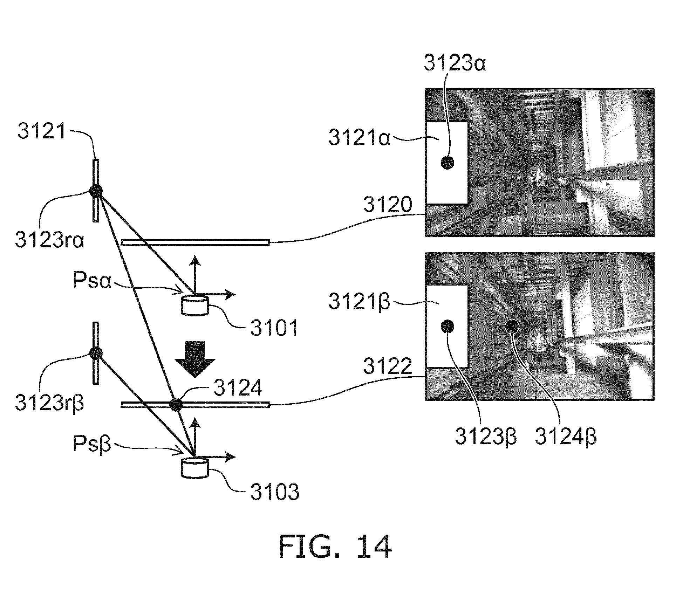

FIG. 14 is a schematic view illustrating the operation of the image projection determination unit.

In the example shown in FIG. 14, the imaging device images a first image 3120 from the first position Psα at the first time Tm1. The imaging device images a second image 3122 from the second position Psβ at the second time Tm2. An object 3121 has the same motion as the imaging device. The object 3121 appears as an image 3121α on the first image 3120 and appears as an image 3121β on the second image 3122.

For example, a position 3123 on the object 3121 is positioned at a three-dimensional position 3123rα at the first time Tm1. The three-dimensional position 3123rα is projected onto a projection position 3123α on the first image 3120.

For example, the position 3123 on the object 3121 is positioned at a three-dimensional position 3123rβ at the second time Tm2. The three-dimensional position 3123rβ is projected onto a projection position 3123β on the second image 3122. The three-dimensional position 3123rα is projected onto a projection position 3124β on the second image 3122. On the image, the position inside the space corresponding to the projection position 3123β is different from the position inside the space corresponding to the projection position 3124β. In step S41 to step S51, the three-dimensional position that corresponds to such a projection position is determined to be a moving body. Such regions that have the same movement as the moving vehicle body are pre-removed using the result of the effective projection range of step S25.

In the example shown in FIG. 13, the first distance information that is measured from the first position Psα vicinity at the first time Tm1 by the length measuring device 3101 is used. However, there are cases where a three-dimensional position corresponding to the first distance information does not appear in the first image 3100. In such a case, distance information that is measured from a three-dimensional position Psγ appearing in the first image 3100 may be used. For example, the distance information that is measured from the three-dimensional position Psγ includes a three-dimensional position 3108. The relative arrangement of the length measuring device (the three-dimensional position Psγ) and the imaging device is determined in step S21.

In step S41, for example, a feature that corresponds to the projection position 3104α and a feature that corresponds to the projection position 3106α are calculated based on the first image 3100. Further, a feature that corresponds to the projection position 3104β and a feature that corresponds to the projection position 3106β are calculated based on the second image 3102.

The luminance value (the pixel value) at the projection position is used as the feature. The feature may be calculated from multiple pixel values inside a small window including the projection position. The gradient of the pixel values at the projection position may be used as the feature. A method such as SIFT, SURF, ORB, BRISK, BRIEF, etc., may be used to calculate the feature.

Step S51 is similar to step S50. Step S61 is similar to step S60.

For example, the change determination unit 50 or the output unit 60 may output the three-dimensional positions corresponding to being outside the effective projection range based on the effective projection range determined in step S25. For example, it may be further detected that the object is moving with the imaging device based on the first image and the second image.

In the second embodiment as well, for example, the distance information is acquired using the length measuring device installed in the moving vehicle body. Further, the multiple images are acquired using the imaging device installed in the moving vehicle body. The foreground region can be extracted based on the distance information and the images obtained from mutually-different multiple viewpoints.

For example, the foreground region extraction device according to the embodiment can be installed in an automobile or a robot. The regions of the image where attachments of the automobile such as the hood or a fender pole appear can be designated by using a camera and a length measuring device such as a laser sensor, a millimeter-wave radar, etc., installed in the automobile. The attachments of the automobile are not to be detected when performing environment recognition of the surroundings such as obstacle detection, etc. Also, utilization is possible to detect a moving body that is moving with respect to stationary regions such as utility poles, buildings, etc. Similar functions are possible by being mounted in a robot or a train.

The foreground region extraction device according to the embodiment may be installed in an aircraft. The imaging device and the length measuring device that are mounted in the aircraft are used to image and perform length measurement of the ground and air to detect moving vehicles, humans, or other aircraft. For example, only the stationary background is extracted by using the extracted foreground. By restoring the three-dimensional configuration of the ground based on the background, the three-dimensional environment can be constructed even if a vehicle is moving on a road by excluding the region of the traveling vehicle. Also, the convenience for simulations of urban environments, etc., is good because the varying components can be removed.

The foreground region extraction device according to the embodiment may be used in a surveying instrument. For example, the foreground region according to the embodiment may be used when surveying using a 3D laser scanner, etc., to remove, from the 3D data, humans, vehicles, etc., that have undesirably entered the measurement area when surveying. The 3D configuration of the surroundings not including moving bodies which are not to be measured can be acquired by extracting the foreground region and using the three-dimensional information belonging to only the foreground region.

The foreground region extraction device according to the embodiment may be installed in an elevator. For example, the imaging device and the length measuring device are installed on or under the elevator car and pointed in the movement direction. The three-dimensional position of the elevator car that is undesirably measured by the length measuring device when acquiring the 3D configuration inside the elevator shaft can be removed using the foreground region extraction device according to the embodiment. Thereby, the three-dimensional structure of the entire elevator shaft not including the elevator car or objects (an air conditioner, a winch, etc.) attached to the elevator car can be acquired. Similarly, the foreground region extraction device according to the embodiment may be installed in a vehicle moving through a tunnel. Thereby, the 3D configuration inside the tunnel can be acquired by removing the data of the vehicle, attachments of the vehicle, other vehicles traveling through the tunnel, etc.

The foreground region extraction device according to the embodiment may include a controller such as a CPU (Central Processing Unit), etc., a memory device such as ROM, RAM, etc., an external memory device such as a HDD, a SSD, etc., an imaging device such as a camera, etc. The foreground region extraction device according to the embodiment may include a hardware configuration that utilizes a normal computer. Each component of the foreground region extraction device according to the embodiment described above may be software or hardware. In the embodiment, the processing of a portion of each functional block or each entire functional block may be a program implemented by a computer.

In the embodiment, the storage medium that stores the program may be a computer-readable non-transitory storage medium. The storage medium may include, for example, CD-ROM (-R/-RW), a magneto-optical disk, a HD (hard disk), DVD-ROM (-R/-RW/-RAM), a FD (flexible disk), flash memory, a memory card, a memory stick, other various ROM, RAM, etc.

The embodiments include following features.

Feature 1

A foreground region extraction method comprising:

acquiring first distance information and second distance information, the first distance information including information relating to a plurality of first distances at a first time, the second distance information including information relating to a plurality of second distances at a second time that is different from the first time,

each of the first distances being a distance between a first position inside a three-dimensional space and a position of a plurality of points included in a first region inside the three-dimensional space, each of the second distances being a distance between a second position inside the three-dimensional space and a position of a plurality of positions included in a second region inside the three-dimensional space, the first region and the second region including a third position inside the three-dimensional space, the third position being different from the first position and the second position;

deriving a first image of the points included in the first region projected onto a first plane based on the first distance information; calculating a first feature based on the first image, the first feature corresponding to a first projection position of the third position projected onto the first plane; deriving a second image of the points included in the second region projected onto a second plane based on the second distance information and a relative arrangement of the first position and the second position; calculating a second feature based on the second image, the second feature corresponding to a second projection position of the third position projected onto the second plane;

setting the third position to be included in a background region including a moving body moving inside the three-dimensional space when a difference between the first feature and the second feature is larger than a prescribed value; and

setting the third position to be included in a foreground region not including the moving body when the difference is not more than the prescribed value.

Feature 2

A foreground region extraction method, comprising:

acquiring a first image of a first region inside a three-dimensional space, the first region being imaged from a first position at a first time by the imaging device;

acquiring a second image of a second region inside the three-dimensional space, the second region being imaged from a second position at a second time by the imaging device, the second time being different from the first time;

acquiring first distance information including information relating to a plurality of first distances at the first time measured by a length measuring device,

each of the first distances being a distance between the length measuring device and a position of a plurality of points included in a third region inside the three-dimensional space,

the first region, the second region, and the third region including a third position inside the three-dimensional space, the third position being different from the first position and the second position;

calculating a first feature based on the first image, the first feature corresponding to a first projection position of the third position projected onto the first image;

calculating a second feature based on the second image, the second feature corresponding to a second projection position of the third position projected onto the second image,

the first projection position being determined based on the first distance information and a relative arrangement of the length measuring device and the imaging device,

the second projection position being determined based on the first distance information, the relative arrangement of the length measuring device and the imaging device, and a relative arrangement of the first position and the second position; and

setting the third position to be included in a background region including a moving body moving inside the three-dimensional space when a difference between the first feature and the second feature is larger than a prescribed value, and setting the third position to be included in a foreground region not including the moving body when the difference is not more than the prescribed value.

Feature 3

A program causing a computer to:

acquire first distance information and second distance information, the first distance information including information relating to a plurality of first distances at a first time, the second distance information including information relating to a plurality of second distances at a second time that is different from the first time,

each of the first distances being a distance between a first position inside a three-dimensional space and a position of a plurality of points included in a first region inside the three-dimensional space,

each of the second distances being a distance between a second position inside the three-dimensional space and a position of a plurality of points included in a second region inside the three-dimensional space,

the first region and the second region including a third position inside the three-dimensional space, the third position being different from the first position and the second position;

derive a first image of the points included in the first region projected onto a first plane based on the first distance information;

calculate a first feature based on the first image, the first feature corresponding to a first projection position of the third position projected onto the first plane;

derive a second image of the points included in the second region projected onto a second plane based on the second distance information and a relative arrangement of the first position and the second position;

calculate a second feature based on the second image, the second feature corresponding to a second projection position of the third position projected onto the second plane; and

set the third position to be included in a background region including a moving body moving inside the three-dimensional space when a difference between the first feature and the second feature is larger than a prescribed value, and set the third position to be included in a foreground region not including the moving body when the difference is not more than the prescribed value.

Feature 4

A program causing a computer to:

acquire a first image of a first region inside a three-dimensional space, the first region being imaged from a first position at a first time by an imaging device;

acquire a second image of a second region inside the three-dimensional space, the second region being imaged from a second position at a second time by the imaging device, the second time being different from the first time;

acquire first distance information including information relating to a plurality of first distances at the first time measured by a length measuring device,

each of the first distances being a distance between the length measuring device and a position of a plurality of points included in a third region inside the three-dimensional space,

the first region, the second region, and the third region including a third position inside the three-dimensional space, the third position being different from the first position and the second position;

calculate a first feature based on the first image, the first feature corresponding to a first projection position of the third position projected onto the first image;

calculate a second feature based on the second image, the second feature corresponding to a second projection position of the third position projected onto the second image,

the first projection position being determined based on the first distance information and a relative arrangement of the length measuring device and the imaging device,

the second projection position being determined based on the first distance information, the relative arrangement of the length measuring device and the imaging device, and a relative arrangement of the first position and the second position; and

set the third position to be included in a background region including a moving body moving inside the three-dimensional space when a difference between the first feature and the second feature is larger than a prescribed value, and set the third position to be included in a background region not including the moving body when the difference is not more than the prescribed value.

According to the embodiments, a foreground region extraction device that extracts a foreground region using information obtained from mutually-different multiple positions can be provided.

Hereinabove, embodiments of the invention are described with reference to specific examples. However, the embodiments of the invention are not limited to these specific examples. For example, one skilled in the art may similarly practice the invention by appropriately selecting specific configurations of components such as the processor, the detector, the measuring unit, the imaging device, the movement estimation unit, the output unit, the image projection determination unit, etc., from known art; and such practice is within the scope of the invention to the extent that similar effects can be obtained.

Further, any two or more components of the specific examples may be combined within the extent of technical feasibility and are included in the scope of the invention to the extent that the purport of the invention is included.

Moreover, all foreground region extraction devices and all foreground region extraction methods practicable by an appropriate design modification by one skilled in the art based on the foreground region extraction devices and the foreground region extraction methods described above as embodiments of the invention also are within the scope of the invention to the extent that the spirit of the invention is included.

Various other variations and modifications can be conceived by those skilled in the art within the spirit of the invention, and it is understood that such variations and modifications are also encompassed within the scope of the invention.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the invention.

**Claims**

1. A foreground region extraction device (100), comprising:

   a processor (30) that implements a first operation; and
   a detector (50),
   the first operation including:

   acquiring first distance information and second distance information, the first distance information including information relating to a plurality of first distances at a first time, the second distance information including information relating to a plurality of second distances at a second time that is different from the first time,

   each of the first distances being a distance between a first position ($P\alpha$) inside a three-dimensional space and a position of a plurality of points included in a first region (R1) inside the three-dimensional space,
   each of the second distances being a distance between a second position ($P\beta$) inside the three-dimensional space and a position of a plurality of points included in a second region (R2) inside the three-dimensional space,
   the first region (R1) and the second region (R2) including a third position (P3) inside the three-dimensional space, the third position (P3) being different from the first position ($P\alpha$) and the second position ($P\beta$);

   deriving a first image of the points included in the first region (R1) projected onto a first plane based on the first distance information;
   calculating a first feature based on the first image, the first feature corresponding to a first projection position of the third position (P3) projected onto the first plane;
   deriving a second image of the points included in the second region (R2) projected onto a second plane based on the second distance information and a relative arrangement of the first position ($P\alpha$) and the second position ($P\beta$); and
   calculating a second feature based on the second image, the second feature corresponding to a second projection position of the third position (P3) projected onto the second plane,

   wherein
   the detector (50) sets the third position (P3) to be included in a background region including a moving body moving inside the three-dimensional space when a difference between the first feature and the second feature is larger than a prescribed value, and
   the detector (50) sets the third position (P3) to be included in a foreground region not including the moving body when the difference is not more than the prescribed value.

2. The foreground region extraction device (100) according to claim 1, further comprising a length measuring device (1001) installed in a moving body (1004) provided inside the three-dimensional space, wherein the length measuring device (1001) generates the first distance information and the second distance information by measuring the first distance and the second distance,
   the first position ($P\alpha$) is a position of the length measuring device (1001) at the first time, and
   the second position ($P\beta$) is a position of the length measuring device (1001) at the second time.

3. The foreground region extraction device (100) according to claim 2, further comprising a movement estimation unit (20) that calculates the relative arrangement of the first position ($P\alpha$) and the second position ($P\beta$) by estimating a movement of the length measuring device (1001) inside the three-dimensional space.

4. The foreground region extraction device (100) according to any of claims 2 and 3, wherein the length measuring device (1001) emits a first light, observes a second light, and measures the first distance information based on at least one of a difference between a phase of the first light and a phase of the second light or a difference between a time when the first light is emitted and a time when the second light is observed, the second light being the reflected first light.

5. The foreground region extraction device (100) according to any of claims 1-4, wherein
the first feature includes a pixel value at the first projection position of the first image, and
the second feature includes a pixel value at the second projection position of the second image.

6. The foreground region extraction device (100) according to any of claims 1-5, wherein
the first feature includes a gradient of a pixel value at the first projection position of the first image, and
the second feature is a gradient of a pixel value at the second projection position of the second image.

7. The foreground region extraction device (100) according to any of claims 1-6, wherein
the first feature is calculated from a plurality of pixel values inside a region including the first projection position on the first image, and
the second feature is calculated from a plurality of pixel values inside a region including the second projection position on the second image.

8. A foreground region extraction device (101), comprising:

an imaging device (1103) that images a three-dimensional space;
a processor (30); and
a detector (50),
wherein the processor (30) acquires:

a first image of a first region (Rn1) inside the three-dimensional space, the first region (Rn1) being imaged from a first position (Ps$\alpha$) at a first time by the imaging device (1103);
a second image of a second region (Rn2) inside the three-dimensional space, the second region (Rn2) being imaged from a second position (Ps$\beta$) at a second time by the imaging device (1103), the second time being different from the first time; and
first distance information including information relating to a plurality of first distances at the first time measured by a length measuring device (1101),

each of the first distances are a distance between the length measuring device (1101) and a position of a plurality of points included in a third region (Rn3) inside the three-dimensional space,
the first region (Rn1), the second region (Rn2), and the third region (Rn3) include a third position (Ps3) inside the three-dimensional space, the third position (Ps3) being different from the first position (Ps$\alpha$) and the second position (Ps$\beta$),
the processor (30) calculates a first feature based on the first image, the first feature corresponding to a first projection position of the third position (Ps3) projected onto the first image,
the processor (30) calculates a second feature based on the second image, the second feature corresponding to a second projection position of the third position (Ps3) projected onto the second image,
the first projection position is determined based on the first distance information and a relative arrangement of the length measuring device (1101) and the imaging device (1103),
the second projection position is determined based on the first distance information, the relative arrangement of the length measuring device (1101) and the imaging device (1103), and a relative arrangement of the first position (Ps$\alpha$) and the second position (Ps$\beta$), and
the detector (50) sets the third position (Ps3) to be included in a background region including a moving body moving inside the three-dimensional space when a difference between the first feature and the second feature is larger than a prescribed value, and sets the third position (Ps3) to be included in a foreground region not including the moving body when the difference is not more than the prescribed value.

9. The foreground region extraction device (101) according to claim 8, further comprising an image projection determination unit (40),
wherein the first image includes a first portion, and a first image feature corresponding to the first portion,
the second image includes a second portion, and a second image feature corresponding to the second portion,
the image projection determination unit (40) determines an effective projection range based on the size of a difference between the first image feature and the second image feature, and
the processor (30) calculates the first feature when the first projection position is within the effective projection range.

10. The foreground region extraction device (101) according to any of claims 8 and 9, wherein the detector (50) further detects an object positioned at the third position (Ps3) to be moving with the imaging device (1103), the detecting being based on the first image and the second image.

11. The foreground region extraction device (101) according to any of claims 8-10, further comprising a length measuring device (1101) installed in a moving body (1104) provided inside the three-dimensional space, wherein the length measuring device measures the first distance information.

12. A foreground region extraction method, comprising:

acquiring first distance information and second distance information, the first distance information including information relating to a plurality of first distances at a first time, the second distance information including information relating to a plurality of second distances at a second time that is different from the first time,

each of the first distances being a distance between a first position (Pα) inside a three-dimensional space and a position of a plurality of points included in a first region (R1) inside the three-dimensional space, each of the second distances being a distance between a second position (Pβ) inside the three-dimensional space and a position of a plurality of positions included in a second region (R2) inside the three-dimensional space, the first region (R1) and the second region (R2) including a third position (P3) inside the three-dimensional space, the third position (P3) being different from the first position (Pα) and the second position (Pβ);

deriving a first image of the points included in the first region (R1) projected onto a first plane based on the first distance information;
calculating a first feature based on the first image, the first feature corresponding to a first projection position of the third position (P3) projected onto the first plane;
deriving a second image of the points included in the second region (R2) projected onto a second plane based on the second distance information and a relative arrangement of the first position (Pα) and the second position (Pβ);
calculating a second feature based on the second image, the second feature corresponding to a second projection position of the third position (P3) projected onto the second plane;
setting the third position (P3) to be included in a background region including a moving body moving inside the three-dimensional space when a difference between the first feature and the second feature is larger than a prescribed value; and
setting the third position (P3) to be included in a foreground region not including the moving body when the difference is not more than the prescribed value.

13. A foreground region extraction method, comprising:

acquiring a first image of a first region (Rn1) inside a three-dimensional space, the first region being (Rn1) imaged from a first position (Psα) at a first time by the imaging device (1103);
acquiring a second image of a second region (Rn2) inside the three-dimensional space, the second region (Rn2) being imaged from a second position (Psβ) at a second time by the imaging device (1107), the second time being different from the first time;
acquiring first distance information including information relating to a plurality of first distances at the first time measured by a length measuring device (1101),

each of the first distances being a distance between the length measuring device (1101) and a position of a plurality of points included in a third region (Rn3) inside the three-dimensional space, the first region (Rn1), the second region (Rn2), and the third region (Rn3) including a third position (Ps3) inside the three-dimensional space, the third position (Ps3) being different from the first position (Psα) and the second position (Psβ);

calculating a first feature based on the first image, the first feature corresponding to a first projection position of the third position (Ps3) projected onto the first image;

19

calculating a second feature based on the second image, the second feature corresponding to a second projection position of the third position (Ps3) projected onto the second image,

the first projection position being determined based on the first distance information and a relative arrangement of the length measuring device (1101) and the imaging device (1103),
the second projection position being determined based on the first distance information, the relative arrangement of the length measuring device (1101) and the imaging device (1103), and a relative arrangement of the first position (Ps$\alpha$) and the second position (Ps$\beta$); and

setting the third position (Ps3) to be included in a background region including a moving body moving inside the three-dimensional space when a difference between the first feature and the second feature is larger than a prescribed value, and setting the third position (Ps3) to be included in a foreground region not including the moving body when the difference is not more than the prescribed value.

14. The method according to claim 13, further comprising calculating the relative arrangement of the first position (Ps$\alpha$) and the second position (Ps$\beta$) by estimating a movement of the length measuring device (1101) inside the three-dimensional space.

15. The method according to any of claims 13 and 14, wherein
the first image includes a first portion, and a first image feature corresponding to the first portion,
the second image includes a second portion, and a second image feature corresponding to the second portion,
an effective projection range is determined based on the size of a difference between the first image feature and the second image feature, and
the first feature is calculated when the first projection position is within the effective projection range.

100

MEASURING UNIT — 10

MOVEMENT
ESTIMATION UNIT — 20

IMAGE PROJECTOR — 30

CHANGE
DETERMINATION UNIT — 50

OUTPUT UNIT — 60

# FIG. 1

```
                    ┌─────────────┐
                    │    START    │
                    └─────────────┘
                           │
              ┌────────────────────────┐
              │       INPUT DATA       │─────  S10
              └────────────────────────┘
                           │
              ┌────────────────────────┐
              │     ESTIMATE MOTION     │─────  S20
              └────────────────────────┘
                           │
              ┌────────────────────────┐
              │ GENERATE PROJECTED IMAGE│─────  S30
              └────────────────────────┘
                           │
              ┌────────────────────────┐
              │    CALCULATE FEATURE    │─────  S40
              └────────────────────────┘
                           │
              ┌────────────────────────┐
              │    CALCULATE CHANGE/    │─────  S50
              │    DETERMINE CHANGE     │
              └────────────────────────┘
                           │
              ┌────────────────────────┐
              │      OUTPUT DATA        │─────  S60
              └────────────────────────┘
                           │
                    ┌─────────────┐
                    │     END     │
                    └─────────────┘
```

# FIG. 2

FIG. 3

FIG. 4

2012

2011  2013

2014

32

2015

2010

FIG. 5A

2017

2016

FIG. 5B

4002

4003

4001

# FIG. 6

5003

5001

5002

5004

5006

52

5005
(P3)

2011α,
2011β

Pα

1001

Pβ

1003

# FIG. 7

10                    15                              101

| MEASURING UNIT | IMAGING UNIT |
| --- | --- |

| MOVEMENT ESTIMATION UNIT | 20 |

| IMAGE PROJECTION DETERMINATION UNIT | 40 |

| IMAGE PROJECTOR | 30 |

| CHANGE DETERMINATION UNIT | 50 |

| OUTPUT UNIT | 60 |

# FIG. 8

START

INPUT DATA — S11

ESTIMATE MOTION — S21

ESTIMATE EFFECTIVE PROJECTION RANGE — S25

CALCULATE PROJECTION POSITION — S31

CALCULATE FEATURE — S41

CALCULATE CHANGE/DETERMINE CHANGE — S51

OUTPUT DATA — S61

END

FIG. 9

FIG. 10

1102

1101    1103

1104

FIG. 11

Rn1

Rn3

1102

1101    1103

1104

Psα

1109

1110

Rn2

1106

1105    1107

1108

Psβ

1112

1111

2100

2101

FIG. 12

3108

Psγ

3107

3104

3105

3106
(Ps3)

Psα

3101

3100

Psβ

3103

3102

3105α  3106α  3104α

3107β    3104β
3106β
3105β

FIG. 13

FIG. 14